(19) Europäisches Patentamt
European Patent Office
Office européen des brevets

(11) Numéro de publication: 0 314 584 A1

# (12) DEMANDE DE BREVET EUROPEEN

(21) Numéro de dépôt: 88420355.5

(22) Date de dépôt: 18.10.88

(51) Int. Cl.⁴: C 08 L 83/04
C 08 L 101/00, C 08 K 5/54,
C 08 K 3/00

(30) Priorité: 20.10.87 FR 8714749

(43) Date de publication de la demande:
03.05.89 Bulletin 89/18

(84) Etats contractants désignés:
AT BE CH DE ES FR GB GR IT LI LU NL SE

(71) Demandeur: RHONE-POULENC CHIMIE
25, quai Paul Doumer
F-92408 Courbevoie Cédex (FR)

(72) Inventeur: Peccoux, Pierre-Michel
71, Rue Henri Gorjus
F-69004 Lyon (FR)

Schorsch, Gilbert
9, Rue du Sellier
F-92700 Colombes (FR)

(74) Mandataire: Seugnet, Jean Louis et al
RHONE-POULENC INTERSERVICES Service Brevets
Chimie Centre de Recherches des Carrières B.P. 62
F-69192 Saint-Fons Cédex (FR)

## (54) Composition organopolysiloxane à fonction acyloxy comportant un hydrogel comme agent de durcissement.

(57) La présente invention a pour objet une composition organopolysiloxane durcissant en élastomère même en atmosphère confinée portant des radicaux acyloxy liés à des atomes de silicium et renfermant un agent de durcissement ajouté avant emploi, choisi parmi un hydrogel d'origine naturelle ou synthétique.

Les compositions sont en particulier utilisables pour la réalisation de joint "in situ" dans l'industrie automobile.

EP 0 314 584 A1

**Description**

## COMPOSITION ORGANOPOLYSILOXANE A FONCTION ACYLOXY COMPORTANT UN HYDROGEL COMME AGENT DE DURCISSEMENT

La présente invention a pour objet une composition organopolysiloxane durcissant en élastomère même en atmosphère confinée portant des radicaux acyloxy liés à des atomes de silicium et renfermant un agent de durcissement ajouté avant emploi, choise parmi un hydrogel d'origine naturelle ou synthétique.

Les compositions, du type ci-dessus à durcissement éventuellement accéléré, sont connues, elles sont décrites notamment dans le brevet britannique, GB-A-1 308 985 où l'agent de durcissement est un zéolithe contenant de l'eau et dans les brevets européens EP-A-118 325, EP-A-117 772 où l'agent de durcissement est respectivement choisi parmi un hydroxyde alcalin et alcalino-terreux ou bien par un mélange constitué par de l'eau et un phosphate et/ou un polyphosphate alcalin ou alcalino-terreux.

Ces compositions ne sont stables au stockage que si elles sont conservées séparément en 2 composantes (ou en 2 emballages). En effet, l'agent de durcissement, conditionné dans l'une des 2 composantes, contient de l'eau et peut libérer ou engendrer de l'eau lors du mélange des 2 composantes suivi généralement d'un chauffage.

Ces compositions présentent en outre une durée de réticulation (ou de durcissement) plutôt courte, de l'ordre de quelques minutes à 60 minutes. Cette réticulation est en outre indépendante du taux d'humidité de l'atmosphère environnante puisque l'eau peut être apportée exclusivement par l'agent de réticulation.

Ces compositions sont donc utilisées dans des domaines d'application où cette propriété est particulièrement intéressante comme par exemple les fabrications de joints "in situ" dans l'industrie automobile.

Les caractéristiques ci-dessus permettent de distinguer clairement ces compositions, des composition monocomposantes à radicaux acyloxy ou cétiminoxy stables au stockage et durcissant au seul contact de l'humidité de l'air (voir par exemple FR-A 1 193 271 ; US-A 3 061 575 ; FR-A-2 429 811 ; EP-A-102 268 ; EP-A-157 580 et DE-A-3 524 452).

Pour les applications industrielles impliquant le dépôt en continu de joints, on utilise généralement un appareil automatique de dépose de composition diorganopolysiloxane bi-composante (à 2 composantes) possédant une tête mélangeuse équipée d'une buse de dépose, celle-ci se déplaçant selon le profil des joints à fabriquer.

Pour éviter les prises en masse de la composition dans la tête mélangeuse maintenue à température ambiante, lors de son fonctionnement ou lors des arrêts sur une chaîne continue de dépose de joints, il serait souhaitable de disposer d'une composition présentant d'une part une réticulation lente à température ambiante (supérieure à au moins une dizaine de minutes) après mélange des deux composantes c'est-à-dire après mélange de l'agent de durcissement et, d'autre part, une réticulation très rapide du joint après sa dépose.

La maîtrise du temps de réticulation à température ambiante permettrait d'arrêter une ligne continue de dépose de joints sans qu'il soit nécessaire de purger la tête mélangeuse. Une prise assez lente à température ambiante serait également favorable à l'obtention d'une adhérence convenable du joint sur les substrats car la composition s'étalerait facilement sur ces substrats avec un temps de contact suffisamment long pour assurer un mouillage convenable de la surface, car l'adhérence des joints sur les substrats est souvent une propriété essentielle du joint.

Il est également souhaitable de disposer d'une composition dont la prise est rapide sous l'effet d'une élévation de température la plus basse possible. En effet, une élévation modérée de la température permettrait de maintenir des cadences élevées sur les chaînes industrielles de dépose en continu de joints.

Une telle composition devrait présenter en outre, au niveau de l'élastomère obtenu, de bonnes propriétés mécaniques en particulier à chaud et en atmosphère confinée sur le plan de la déformation rémanente à la compression (DCR).

Les compositions connues à durcissement éventuellement accéléré ne présentent pas l'ensemble des propriétés souhaitées citées ci-dessus. En effet les compositions dont l'agent de durcissement est l'oxyde de zinc et de l'eau ou bien des zéolithes ne présentent pas notamment des propriétés mécaniques satisfaisantes à chaud en atmosphère confinée.

Les compositions décrites dans les brevets européens EP-A-118 325 et EP-A-177 772 ont permis de faire un progrès très important au niveau de la conservation des propriétés mécaniques à chaud en atmosphère confinée et ont donné la possibilité d'utiliser des compositions pour le collage ou le jointement de pièces circulant sur des chaînes industrielles de montage ou pour lesquelles il n'existe pas d'aires de stockage disponibles qui assureraient leur durcissement complet. Toutefois ces compositions peuvent présenter un temps de prise à température ambiante trop court et une adhérence sur substrat, en particulier métallique, qui peut être insuffisante.

La présente invention a précisément pour but de proposer une composition organopolysiloxane qui présente l'ensemble des propriétés souhaitées citées ci-dessus.

Elle concerne en effet une composition organopolysiloxane pouvant durcir en élastomère même en absence d'humidité de l'air, en particulier en atmosphère confinée, caractérisée en ce qu'elle comporte :

A. - 100 parties de polymères principalement $\alpha$, $\omega$-di(hydroxy)-diorganopolysiloxane, de viscosité 700

à 1 000 000 mPa.s à 25° C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.

B. - 2 à 20 parties d'agents réticulants de formule générale :

$R_pSi(OCOR')_{4-p}$

dans laquelle le symbole R a la signification donnée sous (A), le symbole R', représente un radical hydrocarboné exempt d'insaturation aliphatique, ayant de 1 à 15 atomes de carbone et le symbole p représente zéro ou un.

C. - 0 à 150 parties de charges minérales.

D. - 0,01 à 10, de préférence 0,05 à 2 parties pour 100 parties de A + B + C d'un hydrogel comportant une partie d'un colloïde coagulé d'origine naturelle ou synthétique et au moins cinq parties d'eau.

Dans ce qui suit ou ce qui précède, sauf mentions contraires, les parties et pourcentages indiqués sont en poids.

Selon la présente invention, le terme "hydrogel" désigne un gel qui contient de l'eau, ce gel provenant de la coagulation d'un colloïde avec inclusion d'eau. Le colloïde peut être d'origine naturelle ou synthétique.

Le colloïde coagulé, de préférence insoluble dans l'eau, forme un gel physique ou chimique et possède la propriété d'absorber des quantités importantes d'eau dans son réseau macromoléculaire. Cette propriété permet de n'introduire que de très faibles quantités de colloïde dans la composition organopolysiloxane.

Ces quantités très faibles n'ont pas d'influence ou une influence négligeable sur les propriétés finales de l'élastomère silicone obtenu après réticulation.

Ces hydrogels présentent par contre l'avantage de fournir un moyen efficace et aisé à mettre en oeuvre, pour disperser de façon homogène l'eau à l'intérieur de la composition.

Sont utilisables dans le cadre de la présente invention les hydrogels d'origine naturelle dont le réseau macromoléculaire est de type polysaccharide tels que l'agar-agar, la gelose, l'alginate, la carboxymethylcellulose, telle que décrite en particulier dans le brevet US-A-3 589 364, l'hydroxyéthylcellulose, la méthylcellulose, le triacétate de cellulose gélifié tel que décrit notamment dans les brevets US-A-1 693 890 et US-A-3 846 404, l'amidon greffé polyacrylonitrile tel que décrit notamment dans le brevet US-A 3 935 099 et US-A-3 661 815 et l'amidon greffé acide acrylique tel que décrit dans le brevet FR-A-2 305 452.

Sont également utilisables dans le cadre de la présente invention, les hydrogels d'origine synthétique dont le réseau macromoléculaire est formé de polymères de méthacrylate d'hydroxyéthyle ; alcool polyvinylique réticulé ; polyacrylamide ; acétate de polyvinyle partiellement hydrolisé ; acrylate d'hydroxyéthyle ; mono-acrylate de diéthylène-glycol ; monométhacrylate de diéthylène-glycol ; acrylate de 2-hydroxypropyle ; méthacrylate de 2-hydroxypropyle ; acrylate de 3-hydroxypropyle ; méthacrylate de 3-hydroxypropyle ; monométhacrylate de dipropylène-glycol ; vinylpyrrolidone ; acrylamide ; méthacrylamide ; N-propylacrylamide ; N-isopropylméthacrylamide : N-méthylacrymalide ; N-2-hydroxyéthylméthacrylamide ; hydrogels de polyuréthanne formés de polymères légèrement réticulés de prépolymères terminés par un isocyanate qui sont les produits de réaction d'un poly(alkylèneoxy)polyol avec un diisocyanate organique légèrement réticulé avec de l'eau ou une polyamine organique, comme décrit dans le brevet US-A-3 939 105 ; copolymères de monomères à insaturation éthylénique d'acrylates et de méthacrylates hydroxyalkyliques et d'acrylates et méthacrylates d'alkoxyalkylène-glycols, comme décrit dans le brevet US-A-4 038 264 ; résines du type polyéther-polyuréthanne produites par réaction d'un diisocyanate organique avec un mélange d'au moins deux diols dont l'un est un polyalkylène-glycol hydrosoluble de poids moléculaire compris entre 3 000 et 30 000 et dont le second est un diphénol oxyalkylé portant 2 à 20 groupes oxyalkyléniques, ainsi que d'autres hydrogels connus de l'homme de l'art.

Sont particulièrement préférés dans le cadre de la présente invention les hydrogels dont le colloïde coagulé insoluble dans l'eau est porteur de groupes carboxylates en particulier acrylate et/ou méthacrylate d'un métal alcalin, en particulier de sodium et comportant au moins 20 parties de préférence au moins 50 parties d'eau, pour 1 partie de colloïde.

Sont encore plus particulièrement préférés, dans le cadre de la présente invention, les polymères d'acrylate d'un métal alcalin (en particulier le sodium) obtenus par le procédé de polymérisation en suspension aqueuse d'acide acrylique et d'acrylate de métal alcalin tel que décrit notamment dans les brevets européens EP-A-36 463 et EP-A-83 222 cités comme référence.

Les polymères (A) de viscosité 700 à 1 000 000 mPa.s à 25° C, de préférence 1 000 à 700 000 mPa.s à 25° C, sont des polymères essentiellement linéaires, constitués de motifs diorganosiloxy de formule précitée $R_2SiO$, et bloqués à chaque extrémité de leur chaîne par un groupe hydroxyle ; toutefois la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 8 atomes de carbone, substitués ou non par des atomes d'halogènes ou des groupes cyano, et représentés par les symboles R, peuvent être choisis parmi :

- les radicaux alkyles et halogénoalkyles ayant de 1 à 8 atomes de carbone tels que les radicaux méthyle, éthyle, n-propyle, isopropyle, n-butyle, n-pentyle, n-hexyle, éthyl-2 hexyle, n-octyle, trifluoro-3,3,3 propyle, trifluoro-4,4,4 butyle, pentafluoro-4,4,4,3,3,butyle,
- les radicaux cycloalkyles et halogénocycloalkyles ayant de 4 à 8 atomes de carbone tels que les radicaux

cyclopentyle, cyclohexyle, méthylcyclohexyl difluoro-2,3 cyclobutyle, difluoro-3,4 méthyl-5 cycloheptyle,
- les radicaux alcényles ayant de 2 à 4 atomes de carbone tels que les radicaux vinyle, alkyle, butène-2 yle,
- les radicaux aryles et halogénoaryles ayant de 6 à 8 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux β-cyanoéthyle et γ-cyanopropyle.

A titre d'exemple de motifs représentés par la formule $R_2SiO$ on peut citer ceux de formules :

$(CH_3)_2SiO$
$CH_3(CH_2=CH)SiO$
$CH_3(C_6H_5)SiO$
$(C_6H_5)_2SiO$
$CF_3CH_2CH_2(CH_3)SiO$
$NC\text{-}CH_2CH_2(CH_3)SiO$
$NC\text{-}CH(CH_3)CH_2(CH_2=CH)SiO$
$NC\text{-}CH_2CH_2CH_2(C_6H_5)SiO$

Il doit être compris, selon une variante de l'invention, que l'on peut utiliser comme polymère (A) des copolymères ou un mélange constitué de 2 polymères α,ω-di(hydroxy)diorganopolysiloxanes qui diffèrent entre eux par le poids moléculaire et/ou la nature des groupements liés aux atomes de silicium.

Ces copolymères α, ω-di(hydroxy)diorganopolysiloxanes (A) sont commercialisés ; en outre, ils peuvent être aisément fabriqués.

Les agents réticulants (B) sont employés à raison de 2 à 20 parties de préférence de 3 à 15 parties, pour 100 parties de polymères α, ω-di(hydroxy)diorganopolysiloxanes (A).

Ils répondent à la formule précitée

$R_pSi(OCOR')_{4-p}$

dans laquelle, comme déjà indiqué, le symbole R a la signification donnée sous (A), le symbole R′ représente un radical hydrocarboné exempt d'insaturation aliphatique ayant de 1 à 15 atomes de carbone et le symbole p représente zéro ou 1.

Des précisions ont été déjà fournies sur la nature des radicaux représentés par le symbole R. Quant au symbole R′ il représente un radical choisi dans le groupe constitué :
- des radicaux alkyles ayant de 1 à 15 atomes de carbone tels que les radicaux méthyle, éthyle, n-propyle, n-butyle, n-pentyle, éthyl-1 pentyle, n-hexyle, éthyl-2 hexyle, n-octyle, néodécyle, n-décyle, n-dodécyle, n-pentadécyle,
- des radicaux cycloalkyles ayant de 5 à 6 atomes de carbone nucléaire tels que les radicaux cyclopentyle et cyclohexyle,
- des radicaux aryles ayant de 6 à 8 atomes de carbone tels que les radicaux phényle, tolyle, xylyle.

A titre d'exemples d'agents réticulants (B), peuvent être cités ceux répondant aux formules suivantes :
$CH_3Si(OCOCH_3)_3$
$C_2H_5Si\text{-}(OCOCH_3)_3$
$CH_2=CHSi(OCOCH_3)_3$
$C_6H_5Si\text{-}(OCOCH_3)_3$

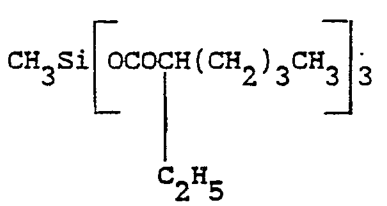

$CF_3CH_2CH_2Si(OCOC_6H_5)_3$
$CH_3Si(OCOC_6H_5)_3$

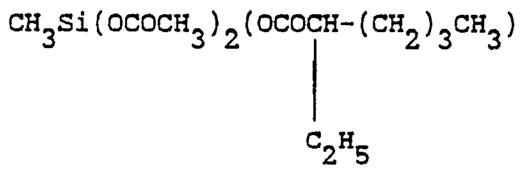

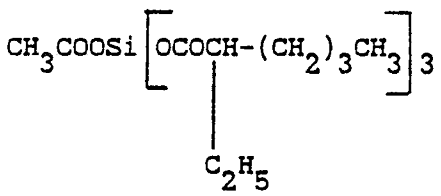

Il est clair que l'on peut remplacer dans les compositions de l'invention les constituants A et B par les produits dévolatilisés équivalents provenant de la réaction stoechimétrique de A sur B conformément au procédé décrit dans le brevet français FR-A-1 220 348.

Les charges minérales (C) sont utilisées à raison de 0 à 150 parties, de préférence 10 à 120 parties, pour 100 parties des polymères α, ω-di(hydroxy)diorganopolysiloxanes (A). Ces charges peuvent se présenter sous la forme de produits très finement divisés dont le diamètre particulaire moyen est inférieur à 0,1 µm. Parmi ces charges figurent les silices de combustion et les silices de précipitation ; leur surface spécifique est généralement supérieure à $40m^2/g$, et se situe le plus souvent dans l'intervalle 150-300 $m^2/g$.

Ces charges peuvent également se présenter sous la forme de produits plus grossièrement divisés, de diamètre particulaire moyen supérieur à 0,1µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine, (hydratée ou non), le nitrure de bore, le lithopone, le métaborate de baryum ; leur surface spécifique est généralement inférieure à 30 $m^2/g$.

Des charges (C) peuvent avoir été modifiées en surface, par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A- 1 126 884, FR-A-1 136 885, FR-A-1 236 505, brevet anglais GB-A-1 024 234). Les charges traitées renferment, dans la plupart des cas, de 3 à 30 % de leur poids de composés organosiliciques.

Les charges (C) peuvent être constituées d'un mélange de plusieurs types de charges de granulométrie différente ; ainsi par exemple, elles peuvent être constituées de 30 à 70 % de silices finement divisées de surface spécifique supérieure à $40m^2/g$ et de 70 à 30 % de silices plus grossièrement divisées de surface spécifique inférieure à 30 $m^2/g$.

Les compositions organopolysiloxanes conformes à l'invention, peuvent comporter, en dehors des constituants A, B, C, D, des catalyseurs de durcissement habituellement choisis dans le groupe constitué par :
- des sels métalliques d'acides carboxyliques, de préférence des sels d'organoétains d'acides carboxyliques tels que le diacétate et le dilaurate de dibutylétain,
- des produits de réaction des sels d'organoétains d'acides carboxyliques avec les esters titaniques (brevet américain US-A-3 409 753),
- des chelates d'étain (brevet européen EP-A-147 323),
- des dérivés organiques du titane et du zirconium tels que les esters titaniques et zirconiques (brevet US-A-4 525 565).

Ces catalyseurs de durcissement sont utilisés habituellement à raison de 0,0004 à 6 parties, de préférence de 0,0008 à 5 parties pour 100 parties des polymères α, ωdi(hydroxy)diorganopolysiloxanes (A).

Les compositions organopolysiloxanes peuvent comporter également des adjuvants et additifs usuels, comprenant en particulier des stabilisants thermiques. Ces derniers produits, qui, par leur présence, améliorent la résistance thermique des élastomères silicones, peuvent être choisis parmi les sels, oxydes et hydroxydes de terres rares (et plus spécialement parmi les oxydes et hydroxydes cériques) ou parmi les oxydes de titane et de fer obtenus, de préférence, par combustion.

Avantageusement les compositions selon l'invention contiennent de 0,1 à 15 parties, et de préférence de 0,15 à 12 parties, de stabilisants thermiques pour 100 parties de polymères α, ω-di(hydroxy)diorganopolysiloxanes (A).

Comme autres additifs peuvent être mentionnés des composés améliorant la résistance à la flamme ; ils sont choisis de préférence parmi les dérivés organiques et minéraux de platine.

Outre les constituants principaux A,B,C,D et les additifs précités, des composés organopolysiloxanes particuliers peuvent être introduits dans le dessein d'agir sur les caractéristiques physiques des compositions

conformes à l'invention et/ou sur les propriétés mécaniques des élastomères issus du durcissement de ces compositions.

Ces composés organopolysiloxanes sont bien connus ; ils comprennent plus spécialement :

(1f) - des polymères α, ω-bis(triorganosiloxy)diorganopolysiloxanes et/ou α(hydroxy), ω(triorganosiloxy)diorganopolysiloxanes, de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle, phényle, 60% au moins de ces radicaux organiques étant des radicaux méthyle et 10% au plus étant des radicaux vinyle.

La viscosité de ces polymères peut atteindre plusieurs dizaines de millions de mPa.s à 25°C ; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A 1 370 884. On utilise de préférence les huiles α, ω-bis(triméthylsiloxy)diméthylpolysiloxanes de viscosité allant de 10 mPa.s à 1 000 mPa.s à 25°C. Ces polymères qui jouent le rôle de plastifiants peuvent être introduits à raison d'au plus 150 parties, de préférence de 5 à 120 parties, pour 100 parties des polymères α, ω-di(hydroxy)diorganopolysiloxanes (A).

(2f) - des polymères méthylpolysiloxanes ramifiés, liquides, ayant de 1,4 à 1,9 radical méthyle par atome de silicium constitués d'une combinaison de motifs de formules :/

$(CH_3)_3SiO_{0,5}$
$(CH_3)_2SiO$ et
$CH_3SiO_{1,5}$

Ils renferment de 0,1 à 8 % de groupes hydroxyles. Ils peuvent être obtenus par hydrolyse des chlorosilanes correspondants comme l'enseignent les brevets français FR-A-1 408 662 et FR-A-2 429 811. On utilise, de préférence, des polymères ramifiés dont les motifs sont répartis, selon les rapports suivants :

$(CH_3)_3SiO_{0,5}/(CH_3)_2SiO = 0,01$ à $0,15$
et $CH_3SiO_{1,5}/(CH_3)_2SiO = 0,1$ à $1,5$

Ces polymères peuvent être introduits à raison d'au plus 70 parties, de préférence de 3 à 50 parties, pour 100 parties des polymères α, ω-di(hydroxy)diorganopolysiloxanes (A). Ils apportent les propriétés de thixotropie notamment avec les silices traitées.

(3f) - des huiles diorganopolysiloxanes bloquées par des groupes hydroxyle et/ou alcoxy inférieurs ayant de 1 à 4 atomes de carbone, de faible viscosité en général comprise dans l'intervalle 1 mPa.s à 40 000 mPa.s à 25°C (si ces huiles sont bloquées uniquement par des groupes hydroxyles leur viscosité est inférieure à 700 mPa.s à 25°C ; les radicaux organiques liés aux atomes de silicium de ces huiles sont, comme précédemment, choisis parmi les radicaux méthyle, vinyle, phényle, 40% au moins de ces radicaux étant des radicaux méthyle et 10% au plus étant des radicaux vinyle.

Comme groupes alcoxy inférieurs bloqueurs de chaine peuvent être cités les groupes méthoxy, éthoxy, isopropoxy, n-propoxy, n-butoxy, isobutoxy, tertiobutoxy. Les taux en groupes hydroxyl et/ou alcoxy sont compris généralement de 0,5 à 20%. Ces huiles sont préparées selon des techniques usuelles décrites plus précisément dans les brevets français FR-A-938 292, FR-A-1 104 674, FR-A-1 116 196, FR-A-1 278 281, FR-A-1 276 619. De préférence, on utilise des huiles α, ω-di(hydroxy)diméthylpolysiloxanes de viscosité 10 à 300 mPa. s à 25°C, des huiles α, ω-dihy(droxy)méthylphénylpolysiloxanes de viscosité 200 à 600 mPa.s à 25°C, et des huiles α, ω-diméthoxy(ou diéthoxy)diméthylpolysiloxanes de viscosité 30 à 2 000 mPa.s à 25°C. Elles peuvent être introduites à raison d'au plus 50 parties, de préférence de 2 à 40 parties, pour 100 parties des polymères α, ω-di(hydroxy)diorganopolysiloxanes (A). Ces huiles permettent de réduire la viscosité globale et sont considérés selon l'expression usuelle comme des "process aids" ainsi que les huiles 2(f).

4(f) - des composés organosiliciques hydroxylés choisis parmi les composés répondant à la formule générale

$Z'SiZ_2(OSiZ_2)_wOH$,

qui sont solides à la température ambiante. Dans cette formule les symboles Z, identiques ou différents, représentent des radicaux méthyle, éthyle, n-propyle, vinyle, phényle ; le symbole Z' représente un radical hydroxyle ou Z et le symbole w représente zéro, 1 ou 2.

A titre d'exemples concrets de ces composés peuvent être cités : le diphénylsilanediol, le méthylphénylsilanediol, le diméthylphénylsilanol, le tétraméthyl-1,1,3,3 disiloxanediol, le dimethyl 1,3 diphényl-1,3 disiloxanediol, le tétraméthyl-1,1,5,5 diphényl-3,3 trisiloxanediol. Ils peuvent être introduits à raison d'au plus 30 parties, de préférence 0,5 à 20 parties, pour 100 parties des polymères α, ω-di(hydroxy)diorganopolysiloxanes (A). Ils confèrent des propriétés thixotropantes au milieu qui en général se gélifie légèrement sous leur action.

Les polymères α, ω-bis(triorganosiloxy)diorganopolysiloxanes et/ou α-(hydroxy) ω-(triorganosiloxy)diorganopolysiloxanes décrits sous (1f) peuvent être remplacés, totalement ou partiellement, par des composés organiques inertes vis-à-vis des constituants A,B,C,D et miscibles au moins avec les polymères α, ω-di(hydroxy)diorganopolysiloxanes (A).

Comme exemples de plastifiants organiques on peut en particulier citer des coupes pétrolières de point

d'ébullition supérieure à 200 °C formées d'un mélange d'hydrocarbures aliphatiques et/ou aromatiques, des polybutylènes de préférence de faible poids moléculaire comme décrits dans les brevets français FR-A-2 256 231, FR-A-2 293 831 et FR-A-2 405 985, les produits d'alkylation du benzène en particulier les polyalkylbenzènes obtenus par alkylation du benzène par des oléfines à longue chaîne linéaire ou ramifiée, en particulier des oléfines à 12 atomes de carbone issues de la polymérisation du propylène comme décrits par exemple dans le brevet français FR-A-2 446 849.

On peut également utiliser les polymères mixtes organiques polydiorganosiloxane tels que les copolymères à blocs polyoxyalkylènes-polyorganosiloxanes, des esters phosphoriques (FR-A-2 372 203), du phosphate de trioctyle (FR-A-2 415 132), des esters dialcoliques d'acides dicarboxyliques (US-A-2 938 007) et des cycloalkylbenzènes (FR-A-2 924 476).

Les produits d'alkylation du benzène, de poids moléculaire supérieur à 200, en particulier les alkylbenzènes et les polyalkylbenzènes sont les plastifiants organiques préférés.

Les compositions selon l'invention peuvent être éventuellement utilisées après dilution dans des composés organiques liquides, les diluants sont de préférence des produits usuels commercialisés choisis parmi :

-les hydrocarbures aliphatiques, cycloaliphatiques, aromatiques, halogénés ou non, tels que le n-heptane, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthodichlorobenzène,

- les cétones aliphatiques et cycloaliphatiques tels que la méthyléthylcétone, la méthylisobutylcétone, la cyclohexanone, l'isophorone,

- les esters tels que l'acétate d'éthyle, l'acétate de butyle, l'acétate d'éthylglycol.

La quantité de diluant demeure en général peu importante, elle est en général inférieure à 50 % en poids par rapport au poids total de la composition.

Conformément à l'invention on a pu mettre en évidence que l'on peut améliorer fortement l'adhérence de l'élastomère sur divers supports en particulier le bois et l'aluminium en ajoutant pour 100 parties de la somme des constituants A, B, C, de préférence de 0,1 à 10, de préférence de 1 à 5 parties d'au moins un agent d'adhérence choisi parmi les produits de formule :

$$Y_nSi(OY')_{4-n}$$

dans laquelle Y est un radical hydrocarboné saturé ou insaturé en $C_1$-$C_{10}$ et Y′ représente un radical alkyle en $C_1$-$C_8$ et un radical alcoxyalkylène en $C_3$-$C_6$, n est 1 ou 0, et les polysilicates d'alkyle en $C_1$-$C_4$, en particulier le polysilicate de méthyle et le polysilicate d'éthyle.

Les mélanges de ces agents d'adhérence sont également utilisables en particulier le mélange de silicate de méthyle et de polysilicate de méthyle.

Les agents d'adhérence E préférés sont :

| | |
|---|---|
| $CH_2 = CHSi(OCH_3)_3$ | vinyltriméthoxysilane |
| $CH_2 = CH - CH_2Si(OCH_3)_3$ | allyltriméthoxysilane |
| $CH_2 = CHSi(OCH_2CH_2OCH_3)_3$ | vinyltris(méthoxyéthoxy)silane |
| $Si(OCH_3)_4$ | silicate de méthyle |
| $Si(OCH_2CH_2OCH_3)_4$ | tétra(méthoxyéthoxy)silane |
| | le polysilicate de méthyle et |
| | le polysilicate d'éthyle. |

La préparation des compositions selon l'invention a lieu en 2 étapes. Selon cette technique qui constitue un objet de la présente invention, on prépare une première composante par mélange à l'abri de l'humidité des constituants A,B,C, éventuellement E et éventuellement des additifs et adjuvants usuels. Cette première composante est stable au stockage et durcit seulement par exposition à l'humidité de l'air ambiant.

Dans une deuxième étape, on ajouter (et homogénéise) au moment de l'emploi, à ces compositions monocomposantes, les agents de durcissement D constituant la deuxième composante.

Selon un mode préféré de réalisation de l'invention, de façon à faciliter l'incorporation de l'agent de réticulation D, la deuxième composante contient l'hydrogel dispersé sous forme de petites particules au sein d'un empâtage. Cet empâtage est formé par homogénéisation à l'aide d'un malaxeur, d'une charge, d'un plastifiant et d'hydrogel.

Le plastifiant peut être la totalité ou une partie du plastifiant (1f) à (4f) de la première composante et/ou une fraction (jusqu'à la moitié) de l'huile A. De même la charge peut être une fraction (quelques %) de la charge C.

Un autre objet de la présente invention est constitué par l'utilisation des compositions à durcissement rapide pour l'obtention de joints.

Les compositions conformes à l'invention peuvent être employées pour de multiples applications comme le jointoiement dans l'industrie du bâtiment, l'assemblage des matériaux les plus divers (métaux, matières plastiques, caoutchoucs naturels et synthétiques, bois, cartons, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

En outre, elles conviennent plus spécialement pour la formation de joints "in-situ" utilisés dans l'industrie automobile. Ces joints "in-situ" englobent plusieurs types, à savoir les joints "écrasés", les joints "en forme" et les joints "injectés".

Les joints "écrasés" sont formés à la suite de l'application d'un cordon pâteux des compositions sur la zone de contact entre 2 éléments métalliques à assembler. Le cordon pâteux est d'abord déposé sur l'un des éléments puis l'autre élément est aussitôt appliqué sur le premier ; il en résulte un écrasement du cordon avant qu'il ne se transforme en élastomère. Ce type de joints s'adresse à des assemblages ne devant pas être couramment démontés (joints de carter d'huile, joints de carter de distribution...).

Les joints "en forme" sont également obtenus à la suite de l'application d'un cordon pâteux des compositions sur la zone de contact entre 2 éléments à assembler. Toutefois, après la dépose du cordon pâteux sur l'un des éléments on attend le durcissement complet du cordon en élastomère et à ce moment-là seulement applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère caoutchouteux, épouse toutes les irrégularités des surfaces à jointoyer de ce fait, il est inutile (1) d'usiner soigneusement les surfaces métalliques devant être mises en contact les unes avec les autres et (2) de serrer avec force les assemblages obtenus ; ces particularités permettent de supprimer dans une certaine mesure, des joints de fixation, des entretoises, des nervures destinés habituellement à raidir et renforcer les éléments des assemblages.

Comme les compositions conformes à l'invention durcissent rapidement par chauffage, en milieu confiné, ou à l'air ambiant il en résulte que les joints "en forme" (et aussi les autres joints "in-situ") découlant du durcissement de ces compositions peuvent être fabriqués dans des condition de fabrication industrielle très contraignantes. Ils peuvent par exemple, être fabriqués sur les chaines de montage usuelles de l'industrie automobile munies d'un appareil automatique de dépose des compositions. Cet appareil automatique possède bien souvent une tête mélangeuse équipée d'un système de chauffage et d'une buse de dépose, celle-ci se déplaçant selon le profil des joints à fabriquer. La tête mélangeuse peut recevoir la composition polysiloxanique monocomposante et l'accélérateur.

Les compositions, fabriquées et distribuées au moyen de cet appareil doivent avoir une durée de durcissement bien ajustée pour d'une part éviter des prises en masse dans la tête mélangeuse et d'autre part obtenir une réticulation complète après la fin de la dépose du cordon pâteux sur les pièces à jointoyer. Ces joints "en forme" conviennent plus spécialement pour les joints de couvre-culbuteurs, de couvercles de boites à vitesses, d'entretoises de distribution et même de carters d'huile... Pour stopper la dépose de joint il suffit d'arrêter le chauffage de la tête mélangeuse et/ou l'arrivée de l'agent dopant puis on dispose d'au moins 10 minutes à température ambiante pour éventuellement purger la tête mélangeuse de la composition organopolysiloxane avant la prise en masse de cette dernière si l'arrêt de la chaîne est supérieur au temps de début de durcissement de la composition.

Les joints injectés sont formés en atmosphère confinée, dans des cavités souvent complètement closes ; les compositions placées dans ces cavités se transforment rapidement en élastomères dont les propriétés sont identiques à celles d'élastomères découlant du durcissement des compositions à l'air ambiant. Ces joints peuvent assurer par exemple l'étanchéité des paliers de vilebrequins.

Les compositions conformes à l'invention conviennent également pour la formation de joints à durcissement rapide dans d'autres domaines que l'automobile. Ainsi elles peuvent servir à coller et à jointoyer des armoires électriques en matière plastique, à produire des joints pour aspirateurs et pour fers à repasser à la vapeur.

Les élastomères issus du durcissement des compositions conformes à l'invention ont des propriétés mécaniques identiques à celles des élastomères issus des compositions monocomposantes connues donc formées par simple mélange des constituants A,B,C, et éventuellement d'additifs usuels sans l'introduction de D. En particulier, les déformations rémanentes à la compression sont relativement faibles, de l'ordre par exemple de 8 à 35% ; en outre, la réticulation complète, après chauffage mesurée par la dureté Shore A est obtenue dès la fin des temps de réticulation précédemment mentionnés lesquels s'étendent généralement de quelques minutes à 60 minutes, parfois plus mais jamais au-delà de 3 heures. Dans le cas des compositions monocomposantes, la réticulation complète demande dans les conditions les plus favorables, au moins une dizaine d'heures. Par ailleurs, la simple introduction d'eau sans hydrogel dans les compositions

monocomposantes, bien qu'elle accélère sensiblement le processus de durcissement ne permet pas de les réticuler correctement.

L'invention est illustrée par les exemples ci-dessous.

EXEMPLE COMPARATIF 1 ET EXEMPLES 2 A 5:

On prépare une composition (A) durcissant dès la température ambiante en élastomère en présence d'humidité de l'air par mélange des constituants suivants :

- 178 parties : huile ($H_1$) (α, ω-dihydroxy)polydiméthylsiloxane de viscosité 20 000 mPa.s à 25 °C,
- 534 parties : huile ($H_2$) (α, ω-dihydroxy)polydiméthylsiloxane de viscosité 3 500 mPa.s à 25 °C,
- 93 parties : silice de combustion (A 200) de surface spécifique BET 200 $m^2/g$ traitée par l'octaméthylcyclotétrasiloxane,
- 170 parties : quartz broyé de diamètre particulaire moyen de 5μm,
- 30 parties : méthyltriacétoxysilane.

Cette composition (A) est fluide et stable en milieu fermé anhydre.

On prépare d'autre part 5 empâtages ($B_1$ à $B_5$) renfermant chacun un système particulier de durcissement de la composition (A). La nature des constituants, ainsi que les quantités en parties en poids de ces empâtages ($B_1$ à $B_5$) figurent dans le tableau 1 ci-après :

TABLEAU 1

| CONSTITUANTS DE CHAQUE EMPATAGE | B1 | B2 | B3 | B4 | B5 |
|---|---|---|---|---|---|
| Huile H1 | 85,5 | 85,5 | 85,4 | 85,4 | 85,4 |
| Huile H2 | 7,25 | 7,25 | 7,25 | 7,25 | 7,25 |
| Silice A 200 | 2,75 | 2,75 | 2,75 | 2,75 | 2,75 |
| Aqua Keep 10 SHP | - | 0,06 | 0,18 | - | - |
| Gomme XANTHANE | - | - | - | 0,18 | - |
| Carboxyméthylcellulose | - | - | - | - | 0,18 |
| Eau introduite | 4,5 | 4,5 | 4,5 | 4,5 | 4,5 |

Pour préparer les empâtages ($B_1$ à $B_5$) on procède de la façon suivante :

Dans un mélangeur à turbine on introduit tout d'abord l'eau et l'hydrogel (sauf pour l'empâtage B1). Le mélange est maintenu sous forte agitation (200 tours/mn) jusqu'à l'obtention d'un gel homogène.

On ajoute ensuite dans le mélangeur à turbine les huiles $H_1$, $H_2$ et la silice. Les compositions $B_1$ à $B_5$ sont ensuite dévolatilisées 2mn sous 1,33 KPa, refroidies à 25 °C et conservées à l'abri de l'air.

Aqua Keep ® 10 SHP est un polymère acrylate de métal alcalin commercialisé par la Société NORSOLOR.

La gomme xanthane est du RHODOPOL 23, commercialisé par la Société RHONE-POULENC.

La carboxyméthylcellulose, sous la forme de son sel de sodium est commercialisée par la Société PROLABO.

On ajoute 5,5 parties des empâtages ($B_1$ à $B_5$) à 100 parties de la composition A pour obtenir les compositions des exemples 1 à 5, la durée de l'incorporation des empâtages B dans la composition A est d'environ 2 minutes. Les compositions obtenues sont aussitôt étalées sous forme d'une couche de 4 mm d'épaisseur sur des plaques d'acier portées à différentes températures (T) à l'intérieur d'enceintes thermostatées.

La couche de la composition déposée sur chaque plaque se transforme en bande caoutchouteuse. On mesure d'une part le temps to en mn, au bout duquel la dureté Shore A est mesurable ainsi que le temps tm en mn, au bout duquel la dureté Shore A atteint sa valeur maximale (environ 42). Les temps to et tm sont mesurés à partir de l'instant où les plaques sont installées dans les enceintes chauffées. Toutes les opérations

ci-dessus sont effectuées sous atmosphère d'azote.
Les résultats sont rassemblés dans le tableau 2 ci-après.

TABLEAU 2

| T | to | | | | | |
|---|---|---|---|---|---|---|
| | Exemples | 1 | 2 | 3 | 4 | 5 |
| 22 °C | | 120 | 15 | 25 | 60 | 30 |
| 30 °C | | 75 | 8 | 16 | 35 | 18 |
| 40 °C | | 35 | 4 | 10 | 20 | 10 |
| 50 °C | | 12 | prise immédia-te | 5/6 | 10 | 5/6 |

| T | tm | | | | | |
|---|---|---|---|---|---|---|
| | Exemples | 1 | 2 | 3 | 4 | 5 |
| 22 °C | | 7 h | 3 h | 3 h 30 | 5 h | 3 h 30 |
| 30 °C | | 4 h | 1 h 45 | 1 h 55 | 3 h 15 | 2 h 10 |
| 50 °C | | 2 h | 1 h | 1 h 10 | 1 h 45 | 1 h 10 |

Du tableau 2, il apparaît que pour une composition déterminée, on dispose d'une large gamme de durée de durcissement en fonction de la température T. On voir par ailleurs que la durée de durcissement la plus courte est obtenue avec l'Aqua Keep 10 SHP. Par ailleurs, la présence d'hydrogel diminue le temps de durcissement comparé au temps obtenu pour l'exemple comparatif 1 sans hydrogel.

-EXEMPLES 6 A 8:

On prépare une composition (C) durcissant dès la température ambiante en élastomère en présence d'humidité de l'air par mélange des constituants suivants :

- 500 parties d'une huile $H_3$ (α, ω-dihydroxy)polydiméthylsiloxane de viscosité 70 000 mPa.s à 25 °C,
- 70 parties de silice de combustion de surface spécifique BET 60 $m^2/g$ traitée par l'octaméthylcyclotétrasiloxane,
- 2,5 parties d'oxyde de titane de type rutile de diamètre particulaire moyen de 5 µm,
- 20 parties de méthyltriacétoxysilane,
- 0,2 partie de titanate de butyle.

On prépare d'autre part 3 empâtages ($D_1$, $D_2$ et $D_3$) renfermant un hydrogel de type acrylique ; la nature des constituants, ainsi que leurs quantités en parties en poids, de ces empâtages figurent dans le tableau 3 ci-après.

TABLEAU 3

| CONSTITUANTS DE CHAQUE EMPATAGE | D1 | D2 | D3 |
|---|---|---|---|
| Huile H1 | 85,5 | 85,5 | 85,4 |
| Huile H4 | 7,25 | 7,25 | 7,25 |
| Silice A 200 | 2,75 | 2,75 | 2,75 |
| Aqua Keep 10 SHP | 0,03 | 0,06 | 0,18 |
| Eau introduite | 4,5 | 4,5 | 4,5 |

L'huile $H_1$, la silice A 200, l'Aqua Keep 10 SHP sont définies à l'exemple 1 ci-dessus.

L'huile $H_4$ est une huile plastifiante ($\alpha,\omega$-triméthylsiloxy)polydiméthylsiloxane de viscosité 1 000 mPa.s à 25 °C.

Le mode opératoire de préparation des empâtages ($D_1$ à $D_3$) est identique à celui des empâtages ($B_1$ à $B_5$) des exemples 1 à 5 ci-dessus.

On ajoute 5,2 parties des empâtages ($D_1$, $D_2$, $D_3$) à 100 parties de la composition (C) pour obtenir les compositions des exemples 6 à 8 ; la durée de l'incorporation des empâtages (D) dans le compositon (C) est d'environ 2 minutes. Les compositions obtenues sont aussitôt étalées sous forme d'une couche de 4 mm d'épaisseur sur des plaques d'acier portées à différentes températures (T) à l'intérieur d'enceintes thermostatées.

La couche de la composition déposée sur chaque plaque se transforme en bande caoutchouteuse dont on détermine la dureté Shore A en fonction du temps. On mesure d'une part le temps to en mn au bout duquel la dureté Shore A est mesurable ainsi que le temps tm en mn au bout duquel la dureté Shore A atteint sa valeur maximale (environ 31). Les temps to et tm sont mesurés à partir de l'instant où les plaques sont installées dans les enceintes chauffées. Toutes les opérations ci-dessus sont effectuées sous atmosphère d'azote. Les résultats sont rassemblés dans le tableau 4 ci-après.

TABLEAU 4

| T | to | | | |
|---|---|---|---|---|
| | Exemples | 6 | 7 | 8 |
| 22 °C | | 12 | 17 | 21 |
| 30 °C | | 8 | 12 | 15 |
| 40 °C | | 4 | 7 | 9 |
| 50 °C | | prise immédiate | 3/4 | 3/4 |

| T | tm | | | |
|---|---|---|---|---|
| | Exemples | 6 | 7 | 8 |
| 22 °C | | 2 h 10 | 2 h 35 | 3 h 10 |
| 30 °C | | 1 h 25 | 1 h 45 | 2 h |
| 50 °C | | 30 mn | 40 mn | 45 mn |

Du tableau 4, il apparaît que pour une composition déterminée, on dispose d'une large gamme de durée de vulcanisation en fonction de la température T. On voit par ailleurs que pour une même quantité d'eau introduite les durées de durcissement les plus courtes sont obtenues avec les quantités d'Aqua Keep les plus faibles.

**Revendications**

1.- Composition organopolysiloxane pouvant durcir en un élastomère même en absence d'humidité de l'air, en particulier en atmosphère confinée caractérisée en ce qu'elle comporte, en poids :

A. - 100 parties de polymères principalement α, ω-di(hydroxy)diorganopolysiloxane, de viscosité 700 à 1 000 000 mPa.s à 25° C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.

B. - 2 à 20 parties d'agents réticulants de formule générale :

$$R_pSi(OCOR')_{4-p}$$

dans laquelle le symbole R a la signification donnée sous (A), le symbole R′ représente un radical hydrocarboné exempt d'insaturation aliphatique, ayant de 1 à 15 atomes de carbone et le symbole p représente zéro ou un.

C. - 0 à 150 parties de charges minérales.

D. - 0,01 à 10 parties pour 100 parties de A + B + C d'un hydrogel comportant en poids une partie d'un colloïde d'origine naturelle ou synthétique et au moins cinq parties d'eau.

2. - Composition selon la revendication 1, caractérisée en ce que l'hydrogel comporte un colloïde porteur de groupe acrylate et/ou méthacrylate d'un métal alcalin et au moins 20, de préférence au moins 50 parties d'eau pour 1 partie de colloïde.

3. Composition selon la revendication 1 ou 2, caractérisée en ce que le colloïde est un polymère d'acrylate d'un métal alcalin obtenu par le procédé de polymérisation en émulsion aqueuse d'acide acrylique et d'acrylate de métal alcalin.

4. - Compositon selon l'une quelconque des revendications précédentes dans laquelle les radicaux R portés par les atomes de silicium du diorganopolysiloxane A sont choisis parmi :
- les radicaux alkyles et halogénoalkyles ayant de 1 à 8 atomes de carbone,
- les radicaux cycloalkyles et halogénocycloalkoyles ayant de 4 à 8 atomes de carbone,
- les radicaux alcényles ayant de 2 à 4 atomes de carbone,
- les radicaux aryles et halogénoaryles ayant de 6 à 8 atomes de carbone,
- les radicaux cyanoalkyles dont les chaînons alkoyles ont de 2 à 3 atomes de carbone.

5. - Composition selon l'une quelconque des revendications précédentes dans laquelle le polyacyloxysilane B a pour formule :
$R_pSi(OCOR')_{4-p}$ dans laquelle le symbole p représente 0 ou 1, le symbole R′ représentant :
- des radicaux alkyles ayant de 1 à 15 atomes de carbone,
- des radicaux cycloalkyles ayant de 5 à 6 atomes de carbone nucléaire,
- des radicaux aryles ayant de 6 à 8 atomes de carbone.

6. - Composition selon l'une quelconque des revendications précédentes, caractérisée en ce que les constituants A et B sont remplacés par les produits dévolatilisés provenant de la réaction stoechiométrique de A sur B.

7. - Composition selon l'une quelconque des revendications précédentes, caractérisée en ce qu'elle contient en outre pour 100 parties de la somme des constituants A, B, C de 0,1 à 10 parties d'au moins un agent d'adhérence E choisi parmi les produits de formule :

$$Y_nSi(OY')_{4-n}$$

dans laquelle Y est un radical hydrocarboné saturé ou insaturé en $C_1$-$C_{10}$ et Y′ représente un radical alkyle en $C_1$-$C_8$ et un radical alcoxyalkylène en $C_3$-$C_6$, n est 1 ou 0 et les polysilicates d'alkyle en $C_1$-$C_4$.

8. - Composition selon la revendication 6, caractérisée en ce que l'agent d'adhérence E est choisi parmi le silicate de méthyle, le tétra(méthoxyéthoxy)silane et le polysilicate de méthyle et leurs divers mélanges possibles.

9. - Composition selon l'une quelconque des revendications précédentes, caractérisée en ce qu'elle comporte en outre un catalyseur de durcissement.

10. - Composition selon l'une quelconque des revendications précédentes, caractérisée en ce qu'elle comporte en outre un plastifiant dont tout ou partie sont des alkylbenzènes et des polyalkylbenzènes de poids moléculaire supérieur à 200.

11. - Utilisation d'une composition telle que définie à l'une quelconque des revendications 1 à 10 pour la fabrication de joints en atmosphère confinée.

Office européen des brevets

# RAPPORT DE RECHERCHE EUROPEENNE

Numero de la demande

EP 88 42 0355

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X<br><br>D<br>Y | US-A-4 508 888 (LETOFFE et al.)<br>* en entier * & EP - A - 01 17772 | 1, 4, 5<br><br>9 - 11<br>7, 8 | C 08 L 83/04<br>C 08 L 101/00<br>C 08 K 5/54<br>C 08 K 3/00 |
| X,D<br><br><br>Y | US-A-4 532 315 (LETOFFE et al.)<br>* en entier * & EP - A - 01 18325 | 1, 4 - 6, 9 - 11<br><br>7, 8 | |
| Y | EP-A-0 022 976 (BAYER)<br>* exemples; revendications 1, 2 * | 7, 8 | |
| D,A | GB-A-1 308 985 (TRIPLEX SAFETY GLASS CO.)<br>* en entier * | 1 | |

| DOMAINES TECHNIQUES RECHERCHES (Int. Cl.4) |
|---|
| C 08 K 5/00<br>C 08 L 83/00 |

Le présent rapport a été établi pour toutes les revendications

| Lieu de la recherche | Date d'achèvement de la recherche | Examinateur |
|---|---|---|
| BERLIN | 11-01-1989 | HOEPFNER W.W.G. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant